# EUROPEAN PATENT APPLICATION

(11) **EP 3 772 406 A1**
(43) Date of publication of application: **10.02.2021**
(21) Application number: 19382694.8
(22) Date of filing: 06.08.2019
(51) Int. Cl.: B29C 65/36, B29C 65/00, B29L 31/30

(54) **INDUCTION WELDING FOR THERMOPLASTIC COMPOSITE PARTS**

(71) Applicant: The Boeing Company, Chicago, IL 60606-2016 (US)
(72) Inventor: SAMALOT, Francis J, Chicago IL 60606-2016 (US); MARTÍN ALONSO, Pedro Pablo, 28042 Madrid (ES); RUBIN, Alexander, Chicago IL 60606-2016 (US); JANSEN, Tom, 2497 GB Den Haag (NL); LABORDUS, Maarten, 2497 GB Den Haag (NL)
(74) Representative: ZBM Patents - Zea, Barlocci & Markvardsen

(57) **Abstract**

Systems and methods are provided for induction welding. One embodiment is a method for induction welding a composite part. The method includes preheating a composite part comprising a matrix of thermoplastic reinforced by fibers, from an ambient temperature to a preheat temperature that is below a melting temperature of the thermoplastic, performing a welding pass of an induction coil over the composite part that initiates while the composite part remains above ambient temperature, and that is performed by generating a welding magnetic field that heats the composite part from the preheat temperature to a welding temperature that equals or exceeds the melting temperature.

## Description

### Field

The disclosure relates to the field of composite materials, and in particular, to fabrication of composite parts.

### Background

Composite parts each comprise a matrix of material reinforced by fibers. For example, some composite parts are made from layers of unidirectional carbon fiber. The layers are stacked in different orientations within a thermoplastic matrix. Thermoplastic composite parts may be induction welded to form an integral composite part. During induction welding, fibers in the thermoplastic composite parts react to an applied magnetic field, resulting in heating. This causes thermoplastic at an interface of the composite parts to reach a melting temperature. In this state, thermoplastic material from the composite parts merges together, and upon cooling, the thermoplastic matrices of the two composite parts solidify into one.

While induction welding provides a substantial benefit over prior techniques, it remains problematic when attempting to weld composite parts that have unidirectional fibers. The difficulty in heating unidirectional composite parts stems from the fact that induction welding generates heat at intersections between fibers within a composite part, and composite parts with unidirectional fibers have substantially fewer fiber intersections where heat may be generated, depending on their layup pattern. Thus, induction coils used for welding such unidirectional composite parts must generate much stronger magnetic fields in order to ensure that a melting temperature is achieved at the weld interface, even after experiencing losses in current that are due to fiber contact heating, dielectric hysteresis, and fiber heating. However, this increase in current increases the area which is affected by induction welding and the intensity of the induction weld, which may result in out-of-tolerance conditions.

Therefore, it would be desirable to have a method and apparatus that take into account at least some of the issues discussed above, as well as other possible issues.

### Summary

Embodiments described herein provide systems and methods which utilize preheating and/or multi-pass induction welding processes in order to perform an induction weld. This reduces the likelihood of overheating that would result in an out-of-tolerance condition, and additionally may reduce the amount of current needed to be passed through an induction coil.

One embodiment is a method for induction welding a composite part. The method includes preheating a composite part comprising a matrix of thermoplastic reinforced by fibers, from an ambient temperature to a preheat temperature that is below a melting temperature of the thermoplastic, performing a welding pass of an induction coil over the composite part that initiates while the composite part remains above ambient temperature, and that is performed by generating a welding magnetic field that heats the composite part from the preheat temperature to a welding temperature that equals or exceeds the melting temperature.

A further embodiment is a non-transitory computer readable medium embodying programmed instructions which, when executed by a processor, are operable for performing a method for induction welding a composite part. The method includes preheating a composite part comprising a matrix of thermoplastic reinforced by fibers, from an ambient temperature to a preheat temperature that is below a melting temperature of the thermoplastic, performing a welding pass of an induction coil over the composite part that initiates while the composite part remains above ambient temperature, and that is performed by generating a welding magnetic field that heats the composite part from the preheat temperature to a welding temperature that equals or exceeds the melting temperature.

A further embodiment is an apparatus for induction welding a composite part. The apparatus includes at least one induction coil that generates magnetic fields that heat a composite part comprising a matrix of thermoplastic reinforced by fibers, and a controller that operates an induction coil to perform a welding pass over a composite part that initiates while the composite part remains above ambient temperature, and is performed by generating a welding magnetic field that heats the composite part from the preheat temperature to a welding temperature that equals or exceeds the melting temperature.

Other illustrative embodiments (e.g., methods and computer-readable media relating to the foregoing embodiments) may be described below. The features, functions, and advantages that have been discussed can be achieved independently in various embodiments or may be combined in yet other embodiments further details of which can be seen with reference to the following description and drawings.

### Description of the Drawings

Some embodiments of the present disclosure are now described, by way of example only, and with reference to the accompanying drawings. The same reference number represents the same element or the same type of element on all drawings.
FIG. 1 illustrates an induction welding system in an illustrative embodiment.
FIG. 2 is a flowchart illustrating a method for operating an induction welding system to perform multiple passes of an induction coil in an illustrative embodiment.
FIG. 3 is a flowchart illustrating a method for applying pressure while performing an induction weld in an illustrative embodiment.
FIG. 4 is a block diagram of an end effector having multiple induction coils in an illustrative embodiment.
FIG. 5 is a perspective view of an induction welding system operating an induction coil to create an induction weld in an illustrative embodiment.
FIGS. 6-8 are end views of induction welding systems that apply pressure during an induction weld in an illustrative embodiment.
FIG. 9 is a chart illustrating relationships between induction weld temperature and induction current in an illustrative embodiment.
FIG. 10 is a flow diagram of aircraft production and service methodology in an illustrative embodiment.
FIG. 11 is a block diagram of an aircraft in an illustrative embodiment.

### Description

The figures and the following description provide specific illustrative embodiments of the disclosure. It will thus be appreciated that those skilled in the art will be able to devise various arrangements that, although not explicitly described or shown herein, embody the principles of the disclosure and are included within the scope of the disclosure. Furthermore, any examples described herein are intended to aid in understanding the principles of the disclosure, and are to be construed as being without limitation to such specifically recited examples and conditions. As a result, the disclosure is not limited to the specific embodiments or examples described below, but by the claims and their equivalents.

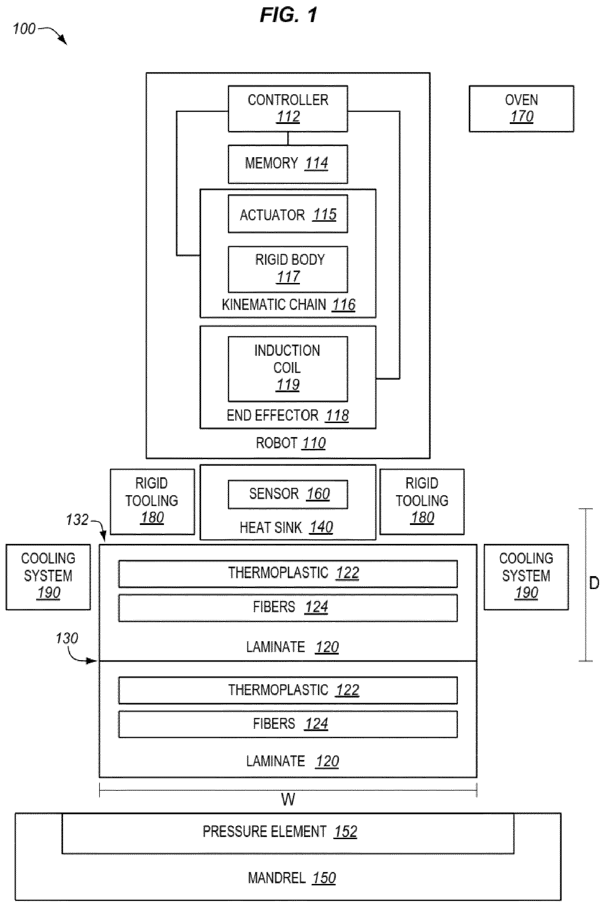

FIG. 1 is a block diagram of an induction welding system 100 in an illustrative embodiment. Induction welding system 100 comprises any system, device, or component operable to generate magnetic fields which inductively heat an interface between thermoplastic composite parts made from unidirectional fiber, in order to create an induction weld. In this embodiment, induction welding system 100 comprises robot 110, which includes a controller 112 and a memory 114 for managing the operations of a kinematic chain 116 comprising actuators 115 and rigid bodies 117. By controlling the motions of kinematic chain 116, the position, speed, and/or direction of an end effector 118 bearing an induction coil 119 may be adjusted. In further embodiments, the structure being welded is moved relative to the induction coil 119, or the induction coil 119 and the structure being welded are both moved relative to each other.

Controller 112 may further control an amount of current applied to induction coil 119, in order to increase or decrease a magnetic field generated by the induction coil 119 (the intensity of the magnetic field that is generated is based on the amount of current applied). In this manner, induction coil 119 is operated to generate magnetic fields of desired strength. The strength of the magnetic field is one factor that controls a temperature of a weld interface 130 between laminates 120 where induction welding is desired. Other factors include a speed at which the induction coil 119 moves along the weld line, a thickness of the layup, a distance of the induction coil 119 from a weld interface, and other variables. Controller 112 may be implemented, for example, as custom circuitry, as a hardware processor executing programmed instructions, or some combination thereof. Controller 112 may further direct the operations of the various components of robot 110 in accordance with instructions stored in a Numerical Control (NC) program stored in memory 114.

Due to the design of induction coil 119, the magnetic fields generated by induction coil 119 are strongest proximate to the induction coil 119, and decrease with increasing radii from the induction coil 119. This process heats the fibers 124, increasing a temperature of the weld interface 130 between laminates 120. Specifically, in response to experiencing the magnetic field, fibers 124 (e.g., carbon fibers) operate as susceptors and generate heat. This increases a temperature of thermoplastic 122 at the laminates 120, causing the thermoplastic 122 to reach a melting temperature. At the melting temperature, thermoplastic 122 in one of the laminates 120 melds with thermoplastic 122 in the other of the laminates 120. This merges the thermoplastic 122 in the laminates 120 into an integral mass which cools into a single matrix of thermoplastic. Thermoplastic 122 may comprise any suitable thermoplastic, such as Polyetheretherketone (PEEK), Polyetherketoneketone (PEKK), etc. Mandrel 150 supports laminates during performance of the induction weld, and pressure element 152 applies pressure across weld interface 130 during the induction weld.

Heat sink 140 absorbs and disperses heat from the surface 132 of one of the laminates 120. This ensures that heat generated within the laminate 120 at weld interface 130 (e.g., a first portion of the laminate) does not cause the surface 132 (e.g., a second portion of the laminate), to exceed the melting temperature (which would result in undesired structural changes to the laminate 120).

In this embodiment, sensor 160 is embedded within heat sink 140, and measures temperatures (or voltages indicative of magnetic field strength) at a distance D away from the weld interface 130. Based on a known relationship between temperature at the weld interface 130 and temperature at heat sink 140 (or a local heat sensor, or based on a known relationship between measured magnetic field strength detected at a sensor and current applied to induction coil 119), a temperature of the induction weld performed at the weld interface 130 may be determined/inferred. Sensor 160 may comprise a thermocouple or an Electromagnetic Field (EMF) sensor (e.g., an EMG sensor having a calibrated loop having at least two hundred loops), such as a sensor designed for operation to acquire measurements at a sampling rate between one and five Megahertz. Controller 112 may perform closed-loop control of induction coil 119 based on input from sensor 160.

Oven 170 may be utilized to pre-heat the laminates 120 to a preheat temperature below a melting temperature, and rigid tooling 180 helps to enforce a desired shape onto laminates 120 during formation of the induction weld. Cooling system 190 (e.g., a blower for air or a sprayer for water) ensures that locations beyond the weld interface 130 (e.g., with respect to the width (W) of the weld interface 130) do not substantially increase temperature above the melting temperature of the thermoplastic 122 during the induction weld. In further embodiments, infrared lamps or resistive heaters may be used for the same purpose as the oven 170.

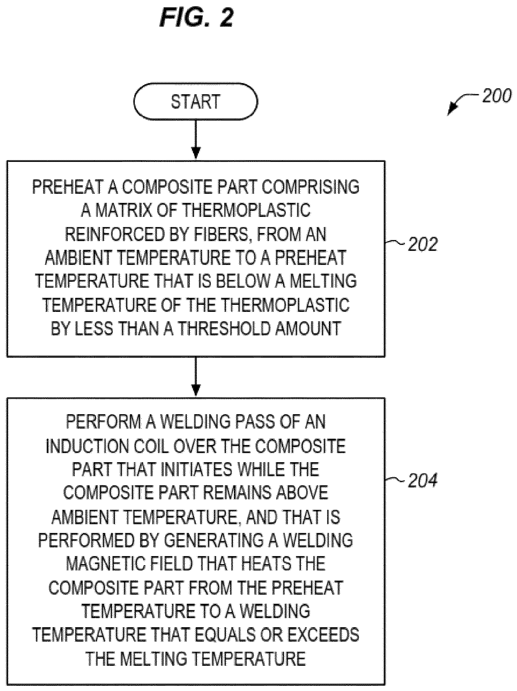

Illustrative details of the operation of induction welding system 100 will be discussed with regard to FIGS. 2-3. Assume, for this embodiment, that multiple thermoplastic laminates comprising layers of unidirectional fiber reinforced composite material have been laid-up and placed against each other for the formation of an induction weld.

FIG. 2 is a flowchart illustrating a method for operating an induction welding system to perform multiple passes of an induction coil in an illustrative embodiment. The steps of method 200 are described with reference to induction welding system 100 of FIG. 1, but those skilled in the art will appreciate that method 200 may be performed in other systems. The steps of the flowcharts described herein are not all inclusive and may include other steps not shown. The steps described herein may also be performed in an alternative order.

In step 202, a composite part (e.g., one or more of laminates 120) is preheated from an ambient temperature, such as room temperature, to a preheat temperature that is below a melting temperature of thermoplastic 122 by less than a threshold amount. In one embodiment, the preheat temperature is no more than thirty degrees Celsius below the melting temperature (i.e., the threshold amount is 30 °C).

In one embodiment, preheating the composite part comprises performing a preheat pass of an induction coil (e.g., induction coil 119) over the composite part, while generating a preheat magnetic field that heats the composite part from the ambient temperature to the preheat temperature. This process may involve applying a current to induction coil 119 in order to generate the preheat magnetic field, and moving the induction coil 119 at a predetermined speed in order to preheat thermoplastic at a weld interface 130 between two different laminates across a substantial distance. In a further embodiment, preheating the composite part comprises warming one or more of the laminates 120 in an oven. In further embodiments, the preheating may be performed via heat lamps, radiative elements, etc.

In step 204, controller 112 performs a welding pass of induction coil 119 over the composite part that initiates while the composite part remains above ambient temperature (e.g. at or within ten degrees of the preheat temperature). The welding pass is performed by generating a welding magnetic field that heats the composite part from the preheat temperature to a welding temperature that equals or exceeds the melting temperature (e.g., by equaling or being within ten degrees Celsius of the melting temperature). The welding magnetic field has insufficient intensity to increase the temperature of the composite part directly from the ambient temperature to the welding temperature in a single pass. However, the welding magnetic field still causes the composite part to reach the melting temperature at weld interface 130, because the composite part has already been preheated (and hence less heat is needed for the composite part to reach the melting temperature). This means that the welding magnetic field may be operated at a reduced level of current than would be needed to directly form an induction weld in an ambient-temperature composite part, which in turn reduces the likelihood of undesirable out-of-tolerance conditions. In one embodiment, the preheat pass and the welding pass are performed by the same induction coil at different periods in time, while in other embodiments the preheat pass and the welding pass are performed by separate induction coils. For example, in one embodiment the robot 110 includes another (e.g., a second) end effector having another (e.g., a second) induction coil. In such an embodiment, the preheat pass is performed by the first induction coil, and the welding pass is performed by the second induction coil.

During the welding pass, controller 112 may operate end effector 118, which moves the induction coil 119 relative to the composite part (e.g., along a desired weld line). This causes welding to occur along the path in which the induction coil is moved, forming a weld across a long distance (e.g., several feet). In further embodiments, the structure being welded is moved relative to the induction coil 119, or the coil and the structure being welded are both moved relative to each other.

Method 200 provides a substantial advantage over prior techniques because its
"two-pass" techniques reduced the amount of current used in a single pass. This in turn reduces the likelihood of out-of-tolerance conditions, which are undesirable. When induction welding is performed with a reduced likelihood of out-of-tolerance conditions, fewer out-of-tolerance welds occur, which results in reduced need for parts to be discarded or reworked, which saves both labor and materials.

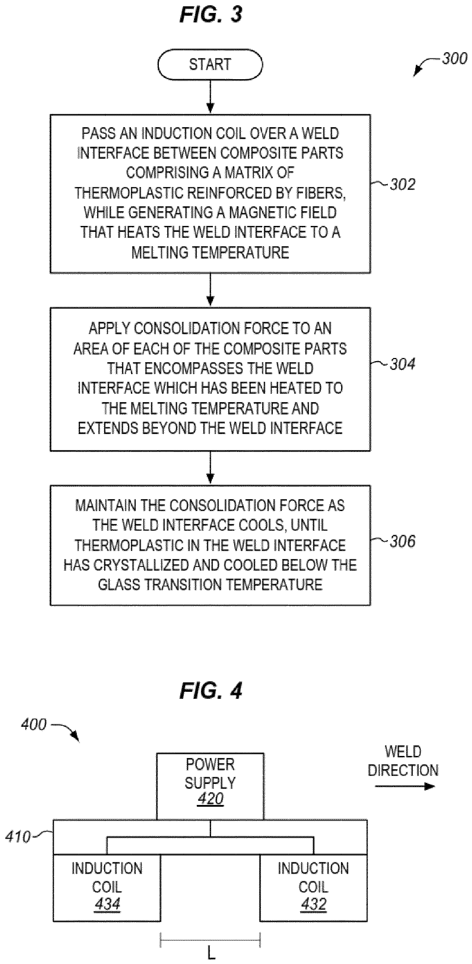

FIG. 3 is a flowchart illustrating a method for applying pressure while performing an induction weld in an illustrative embodiment. The steps of method 300 are described with reference to induction welding system 100 of FIG. 1, but those skilled in the art will appreciate that method 300 may be performed in other systems.

In step 302, controller 112 operates the end effector 118 to pass the induction coil 119 over a weld interface 130 between composite parts (e.g., laminates 120), while generating a magnetic field that heats the weld interface to a temperature at or above a melting temperature of thermoplastic 122. This causes thermoplastic 122 at the weld interface 130 to commingle between the laminates 120. After the induction coil 119 has passed, the commingled thermoplastic cools, which results in a single integral composite part united at weld interface 130.

In step 304, controller 112 operates pressure element 152 (e.g., an inflatable bladder, an actuatable surface, a compression system that proceeds from the coil side down, such as rollers mounted on the coil or end effector, etc.) to apply consolidation pressure to an area of each of the composite parts that encompasses the weld interface 130 and extends beyond the weld interface 130. In one embodiment, the area receiving pressure comprises the entire heat-affected zone (i.e., a zone where the temperature is greater than a value equal to at least the melting temperature minus a margin (e.g., thirty degrees Celsius). In one embodiment, controller 112 applies pressure (e.g., four to eight bar) at and beyond the weld interface 130 while the thermoplastic 122 is molten, in order to ensure that a desired shape is maintained during the weld. This also provides a technical benefit by ensuring a join is maintained at the weld interface 130 without out-of-tolerance conditions such as voids being formed. The consolidation pressure stabilizes the weld interface 130 (and beyond) and prevents deconsolidation. This operation is performed while the thermoplastic remains above or near the melting temperature (e.g., while the thermoplastic is within thirty °C of the melting temperature).

In step 306, controller 112 operates the pressure element 152 to maintain the consolidation pressure as the weld interface 130 cools, until thermoplastic 122 in the weld interface has crystallized and cooled below the glass transition temperature. After the thermoplastic 122 is below its glass transition temperature, the composite parts have been fused together. Hence, the consolidation pressure may be removed without detriment.

Method 300 provides a substantial advantage over prior techniques because it enables shape to be maintained at and beyond a weld interface during induction welding. This reduces the likelihood of deconsolidation, unwelded regions, or other out-of-tolerance conditions

FIG. 4 is a block diagram of an end effector 400 having multiple induction coils in an illustrative embodiment. End effector 400 comprises a frame 410, which bears a power supply 420, as well as induction coils 432 and 434. Induction coil 432 is separated by a length L (e.g., several feet) from induction coil 434 along the weld direction. Power supply 420 provides a first level of current to the induction coil 432, and a second level of current to the induction coil 434. The first level and the second level may be implemented as the same level of current, or as different levels of current depending on design parameters. End effector 400 may be utilized to perform two-pass induction welding. In further embodiments, two-pass welding is performed by passing the same induction coil twice over a welding line (e.g., at different levels of current), or by passing induction coils from different end effectors across the welding line (i.e., in series over the same path).

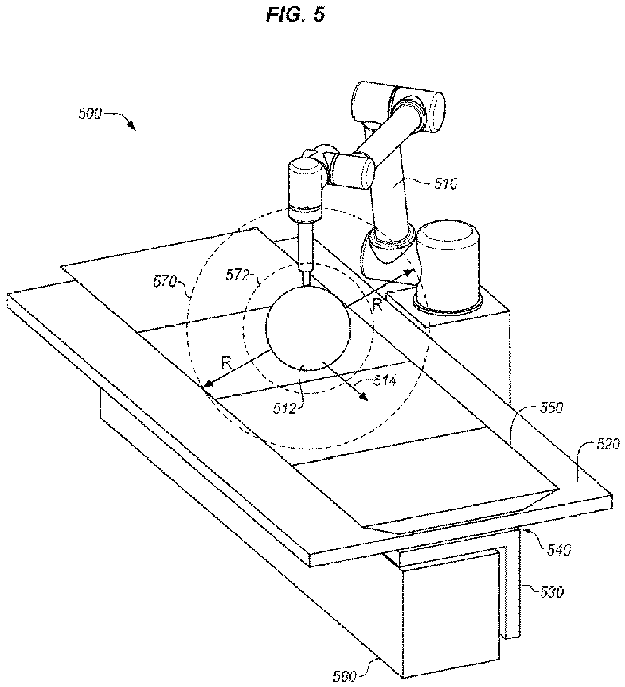

FIG. 5 is a perspective view of an induction welding system 500 operating an induction coil to create an induction weld in an illustrative embodiment. In FIG. 5, a robot 510 (or any suitable system for movement) translates the induction coil 512 along weld direction 514 to generate a magnetic field having a greatest field strength along weld interface 540 between laminate 520 and laminate 530, or the laminates 520 and 530 are translated relative to the induction coil 512. The induction coil generates a magnetic field, which increases in intensity with decreasing spherical Radius (R) Thus, the induction strength is higher closer to the coil (i.e., at radius 572) and lower further from the coil (i.e., at radius 570). This mean that the field strength is higher at the point that is the shortest distance from the induction coil 512 and lowest at the furthest distance from the induction coil 512. Therefore, the induction induced temperature appears to be at its highest directly below the coil which appears to coincide with the centerline of the 540. The lower induction induced temp would be at the widthwise edge of the 540. This would appear to cause a temperature gradient widthwise across the 540. Laminate 530 is placed onto mandrel 560, and heat sinks 550 are disposed atop the laminate 520 in order to diffuse heat.

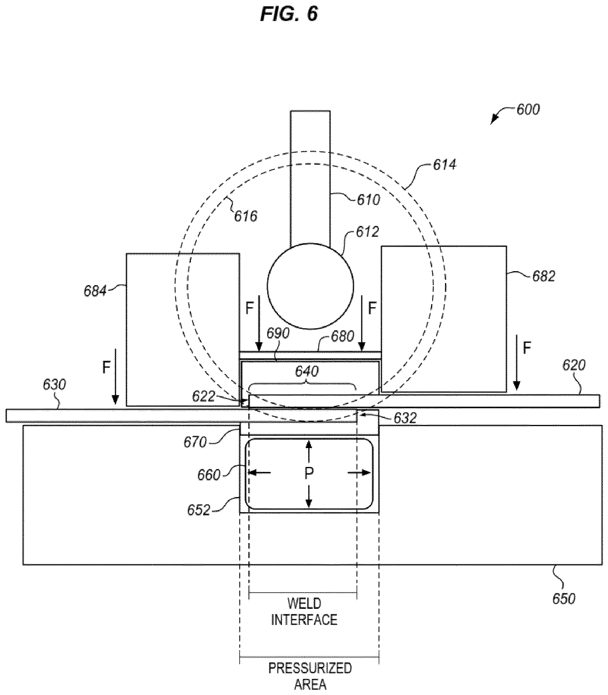

FIGS. 6-8 are end views of induction welding systems that apply pressure during an induction weld in an illustrative embodiment. FIGS. 6-8 may be implemented as alternative systems to those shown in FIG. 5. Furthermore, FIGS. 6-8 illustrate embodiments where the weld interface is masked from view by rigid tooling. Hence, FIGS. 6-8 provide end views of such embodiments.

FIGS. 6-8 illustrate various induction welding systems that apply consolidation pressures in order to facilitate one- or two-pass induction welding of composite parts. FIG. 6 depicts a welding system comprising an end effector 610 with an induction coil 612 that generates a magnetic field. FIG. 6 specifically illustrates a lap splice of two plates(shown with limited width for clarity), although lap splices may be implemented upon skin panels of substantial width. The induction coil 612 generates a magnetic field, and is arranged such that at a radius 614 and at a radius 616, it heats a weld interface 640 between composite parts 620 and 630, and moves into the page to perform an induction weld within a weld interface 640. Because heat is conductively transferred away from the weld interface 640 (i.e., because surrounding areas are cooler), the induction welding process may cause areas surrounding the weld interface 640 to approach, meet, or exceed a melting temperature. For this reason, welding system 600 includes structural components that help to prevent deconsolidation or other out-of-tolerance conditions from occurring during induction welding.

As shown in FIG. 6, a heat sink 690 is disposed atop the composite parts 620 and 630 yet below rigid tooling 680, which is coupled with rigid bodies 682 and 684. Rigid tooling 680, in combination with the rigid bodies 682 and 684, forms an "offset dumbbell" shape. Rigid tooling 680 compresses the heat sink 690 against the surface of composite part 620 above the weld, which effectively makes the heat sink 690 part of the tooling. The composite parts are held in contact via mandrel 650 and rigid tooling 680. Rigid tooling 680 contacts the composite part, and is physically interposed between the composite parts 620 and 630, and the induction coil 612. Rigid tooling 680 operates as a mandrel that applies a force (F) for enforcing a desired shape during the induction welding. A distance between the induction coil 612 and the heat sink 690 (and/or the rigid tooling 680) is experimentally determined. Mandrel 650 includes a cavity 652 that proceeds into the page. Bladder 660 is placed within cavity 652, and inflates to apply pressure (P) (e.g., four to eight bar) to elastomer 670, resulting in consolidation pressure applied to the composite parts. The elastomer 670 extends beyond the end 632 of composite part 630, and the heat sink 690 extends beyond an end 622 of composite part 620. This helps to contain and enforce a desired shape and to pressurize the weld area during induction welding.

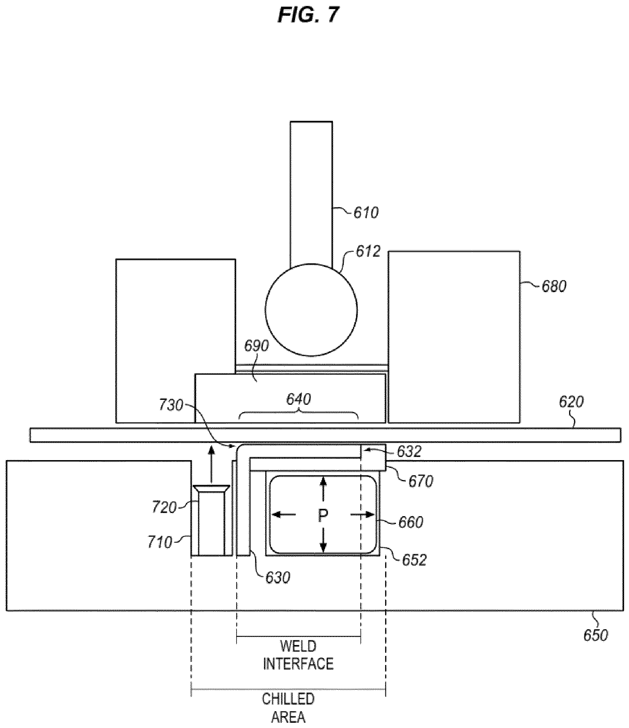

FIG. 7 illustrates a similar system to welding system 600, except that the weld interface 640 includes a bend 730 and has an L-shaped cross-section. Thus, FIG. 7 illustrates a configuration of panel being bonded to a support structure. The bend is actively cooled via an active cooling system 720 (e.g., a blower that blows ambient-temperature air, a water dispenser, etc.) at the bend, that is disposed within a channel 710 at the mandrel 650.

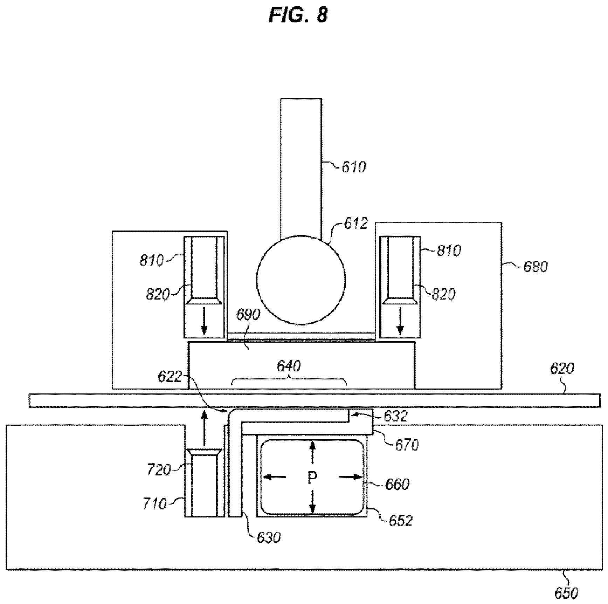

In FIG. 8, additional channels 810 and cooling systems 820 are depicted that are integrated into rigid tooling 680. These additional cooling systems ensure that the rigid tooling 680 remains cool, which facilitates conductive cooling of the heat sink 690. Cooling regions proximate to the weld interface helps to prevent deconsolidation as the weld interface is cooled after welding is performed.

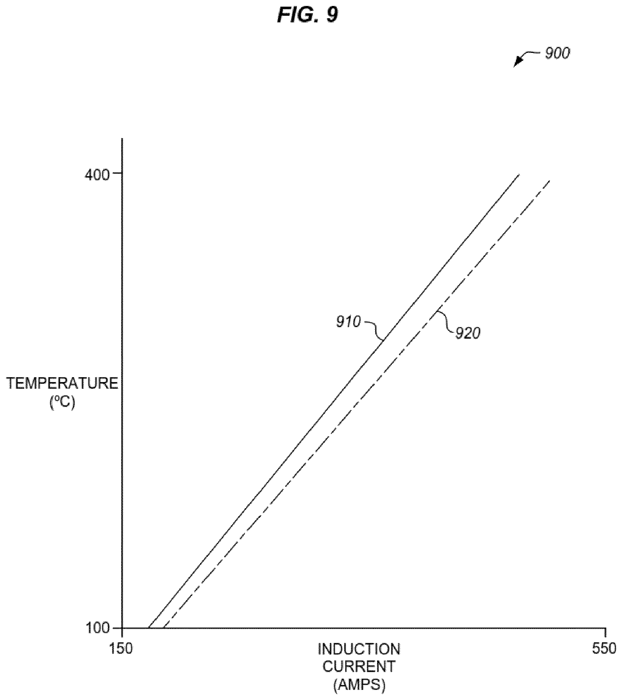

FIG. 9 is a chart 900 illustrating relationships between induction weld temperature and induction current in an illustrative embodiment. These relationships may be used by a controller in response to input from a sensor (e.g., a thermocouple or Electromagnetic Field (EMF) sensor) in order to perform closed-loop control of induction welding operations. As shown herein, line 910 illustrates a relationship for a first configuration of composite parts (e.g., corresponding with a weld between two flat composites), while line 920 illustrates a relationship for a second configuration of composite parts (e.g., corresponding with a weld between two composites that include a bend).

### Examples

In the following examples, additional processes, systems, and methods are described in the context of an induction welding system.

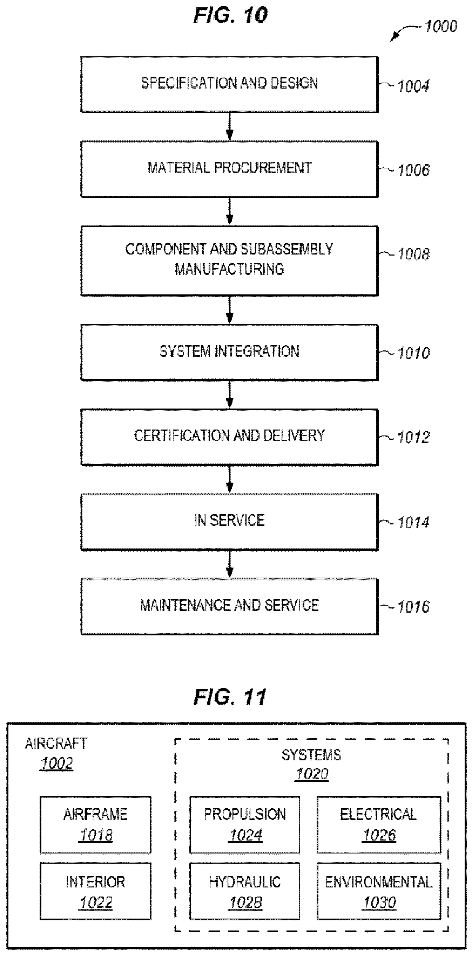

Referring more particularly to the drawings, embodiments of the disclosure may be described in the context of aircraft manufacturing and service in method 1000 as shown in FIG. 10 and an aircraft 1002 as shown in FIG. 11. During pre-production, method 1000 may include specification and design 1004 of the aircraft 1002 and material procurement 1006. During production, component and subassembly manufacturing 1008 and system integration 1010 of the aircraft 1002 takes place. Thereafter, the aircraft 1002 may go through certification and delivery 1012 in order to be placed in service 1014. While in service by a customer, the aircraft 1002 is scheduled for routine work in maintenance and service 1016 (which may also include modification, reconfiguration, refurbishment, and so on). Apparatus and methods embodied herein may be employed during any one or more suitable stages of the production and service described in method 1000 (e.g., specification and design 1004, material procurement 1006, component and subassembly manufacturing 1008, system integration 1010, certification and delivery 1012, service 1014, maintenance and service 1016) and/or any suitable component of aircraft 1002 (e.g., airframe 1018, systems 1020, interior 1022, propulsion system 1024, electrical system 1026, hydraulic system 1028, environmental 1030).

Each of the processes of method 1000 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 11, the aircraft 1002 produced by method 1000 may include an airframe 1018 with a plurality of systems 1020 and an interior 1022. Examples of systems 1020 include one or more of a propulsion system 1024, an electrical system 1026, a hydraulic system 1028, and an environmental system 1030. Any number of other systems may be included. Although an aerospace example is shown, the principles of the invention may be applied to other industries, such as the automotive industry.

As already mentioned above, apparatus and methods embodied herein may be employed during any one or more of the stages of the production and service described in method 1000. For example, components or subassemblies corresponding to component and subassembly manufacturing 1008 may be fabricated or manufactured in a manner similar to components or subassemblies produced while the aircraft 1002 is in service. Also, one or more apparatus embodiments, method embodiments, or a combination thereof may be utilized during the subassembly manufacturing 1008 and system integration 1010, for example, by substantially expediting assembly of or reducing the cost of an aircraft 1002. Similarly, one or more of apparatus embodiments, method embodiments, or a combination thereof may be utilized while the aircraft 1002 is in service, for example and without limitation during the maintenance and service 1016. For example, the techniques and systems described herein may be used for material procurement 1006, component and subassembly manufacturing 1008, system integration 1010, service 1014, and/or maintenance and service 1016, and/or may be used for airframe 1018 and/or interior 1022. These techniques and systems may even be utilized for systems 1020, including, for example, propulsion system 1024, electrical system 1026, hydraulic 1028, and/or environmental system 1030.

In one embodiment, a part comprises a portion of airframe 1018, and is manufactured during component and subassembly manufacturing 1008. The part may then be assembled into an aircraft in system integration 1010, and then be utilized in service 1014 until wear renders the part unusable. Then, in maintenance and service 1016, the part may be discarded and replaced with a newly manufactured part. Inventive components and methods may be utilized throughout component and subassembly manufacturing 1008 in order to manufacture new parts.

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, a control element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

Although specific embodiments are described herein, the scope of the disclosure is not limited to those specific embodiments. The scope of the disclosure is defined by the following claims and any equivalents thereof.

For reasons of completeness, various aspects of the invention are set out in the following numbered clauses:
Clause 1. A method for induction welding a composite part, the method comprising:
   preheating a composite part comprising a matrix of thermoplastic reinforced by fibers, from an ambient temperature to a preheat temperature that is below a melting temperature of the thermoplastic;
   performing a welding pass of an induction coil over the composite part that initiates while the composite part remains above ambient temperature, and that is performed by generating a welding magnetic field that heats the composite part from the preheat temperature to a welding temperature that equals or exceeds the melting temperature.
Clause 2. The method of clause 1 wherein:
   preheating the composite part comprises performing a preheat pass of an induction coil over the composite part, while generating a preheat magnetic field that heats the composite part from the ambient temperature to the preheat temperature.
Clause 3. The method of clause 2 wherein:
   the welding magnetic field has insufficient intensity to increase the temperature of the composite part directly from the ambient temperature to the welding temperature in a single pass.
Clause 4. The method of any of clauses 2 or 3 wherein:
   the preheat pass and the welding pass are performed by the same induction coil at different periods in time.
Clause 5. The method of any of clauses 2 or 3 wherein:
   the preheat pass and the welding pass are performed by separate induction coils.
Clause 6. The method of any of clauses 1 to 5 wherein:
   preheating the composite part comprises warming the composite part within an oven.
Clause 7. The method of any of clauses 1 to 6 wherein:
   the preheat temperature is below a melting temperature of the thermoplastic by less than a threshold amount.
Clause 8. A portion of an aircraft assembled according to the method of any of clauses 1 to 7.
Clause 9. A non-transitory computer readable medium embodying programmed instructions which, when executed by a processor, are operable for performing a method for induction welding a composite part, the method comprising:
   preheating a composite part comprising a matrix of thermoplastic reinforced by fibers, from an ambient temperature to a preheat temperature that is below a melting temperature of the thermoplastic;
   performing a welding pass of an induction coil over the composite part that initiates while the composite part remains above ambient temperature, and that is performed by generating a welding magnetic field that heats the composite part from the preheat temperature to a welding temperature that equals or exceeds the melting temperature.
Clause 10. The medium of clause 9 wherein:
   preheating the composite part comprises performing a preheat pass of an induction coil over the composite part, while generating a preheat magnetic field that heats the composite part from the ambient temperature to the preheat temperature.
Clause 11. The medium of clause 10 wherein:
   the welding magnetic field has insufficient intensity to increase the temperature of the composite part directly from the ambient temperature to the welding temperature in a single pass.
Clause 12. The medium of any of clauses 10 or 11 wherein:
   the preheat pass and the welding pass are performed by the same induction coil at different periods in time.
Clause 13. The medium of any of clauses 10 or 11 wherein:
   the preheat pass and the welding pass are performed by separate induction coils.
Clause 14. The medium of any of clauses 10 to 13 wherein:
   preheating the composite part comprises warming the composite part within an oven.
Clause 15. The medium of any of clauses 10 to 13 wherein:
   the preheat temperature is below a melting temperature of the thermoplastic by less than a threshold amount.
Clause 16. A portion of an aircraft assembled according to the method defined by the instructions stored on the computer readable medium of any of clauses 9 to 15.
Clause 17. An apparatus for induction welding a composite part, the apparatus comprising:
   at least one induction coil that generates magnetic fields that heat a composite part comprising a matrix of thermoplastic reinforced by fibers;
      and
   a controller that operates an induction coil to perform a welding pass over a composite part that initiates while the composite part remains above ambient temperature, and is performed by generating a welding magnetic field that heats the composite part from a preheat temperature to a welding temperature that equals or exceeds a melting temperature.
Clause 18. The apparatus of clause 17 wherein:
   the controller operates the induction coil to perform a preheat pass over the composite part, while generating a preheat magnetic field that heats the composite part from an ambient temperature to a preheat temperature that is below a melting temperature of the thermoplastic.
Clause 19. The apparatus of clause 18 wherein:
   the controller performs the preheat pass and the welding pass with the induction coil.
Clause 20. The apparatus of clause 18 further comprising:
   an end effector that comprises a first induction coil and a second induction coil, the preheat pass is performed by the first induction coil, and the welding pass is performed by the second induction coil.
Clause 21. The apparatus of clause 18 further comprising:
   an end effector that comprises a first induction coil;
   the apparatus further comprises a second end effector having a second induction coil, the preheat pass is performed by the first induction coil, and the welding pass is performed by the second induction coil.
Clause 22. The apparatus of any of clauses 17 to 21 further comprising:
   an end effector that moves the induction coil relative to the composite part.
Clause 23. The apparatus of any of clauses 17 to 22 further comprising:
   an oven that heats the composite part from the ambient temperature to a preheat temperature.
Clause 24. The apparatus of any of clauses 17 to 23 wherein:
   the welding magnetic field has insufficient intensity to increase the temperature of the composite part directly from the ambient temperature to the welding temperature in a single pass.
Clause 25. Fabricating a portion of an aircraft using the apparatus of any of clauses 17 to 24.

## Claims

1. A method for induction welding a composite part, the method comprising:
preheating a composite part comprising a matrix of thermoplastic reinforced by fibers, from an ambient temperature to a preheat temperature that is below a melting temperature of the thermoplastic;
performing a welding pass of an induction coil over the composite part that initiates while the composite part remains above ambient temperature, and that is performed by generating a welding magnetic field that heats the composite part from the preheat temperature to a welding temperature that equals or exceeds the melting temperature.

2. The method of claim 1 wherein:
preheating the composite part comprises performing a preheat pass of an induction coil over the composite part, while generating a preheat magnetic field that heats the composite part from the ambient temperature to the preheat temperature.

3. The method of claim 2 wherein:
the welding magnetic field has insufficient intensity to increase the temperature of the composite part directly from the ambient temperature to the welding temperature in a single pass.

4. The method of any of claims 2 or 3 wherein:
the preheat pass and the welding pass are performed by the same induction coil at different periods in time.

5. The method of any of claims 2 or 3 wherein:
the preheat pass and the welding pass are performed by separate induction coils.

6. The method of any of claims 1 to 5 wherein:
preheating the composite part comprises warming the composite part within an oven.

7. The method of any of claims 1 to 6 wherein:
the preheat temperature is below a melting temperature of the thermoplastic by less than a threshold amount.

8. A non-transitory computer readable medium embodying programmed instructions which, when executed by a processor, are operable for performing the method of any of claims 1 to 7.

9. An apparatus for induction welding a composite part, the apparatus comprising:
at least one induction coil that generates magnetic fields that heat a composite part comprising a matrix of thermoplastic reinforced by fibers;
and
a controller that operates an induction coil to perform a welding pass over a composite part that initiates while the composite part remains above ambient temperature, and is performed by generating a welding magnetic field that heats the composite part from a preheat temperature to a welding temperature that equals or exceeds a melting temperature.

10. The apparatus of claim 9 wherein:
the controller operates the induction coil to perform a preheat pass over the composite part, while generating a preheat magnetic field that heats the composite part from an ambient temperature to a preheat temperature that is below a melting temperature of the thermoplastic.

11. The apparatus of claim 10 wherein:
the controller performs the preheat pass and the welding pass with the induction coil.

12. The apparatus of claim 10 further comprising:
an end effector that comprises a first induction coil and a second induction coil, the preheat pass is performed by the first induction coil, and the welding pass is performed by the second induction coil.

13. The apparatus of claim 10 further comprising:
an end effector that comprises a first induction coil;
the apparatus further comprises a second end effector having a second induction coil, the preheat pass is performed by the first induction coil, and the welding pass is performed by the second induction coil.

14. The apparatus of any of claims 9 to 13 further comprising:
an end effector that moves the induction coil relative to the composite part.

15. The apparatus of any of claims 9 to 14 further comprising:
an oven that heats the composite part from the ambient temperature to a preheat temperature.
